# EUROPÄISCHE PATENTSCHRIFT

(11) **EP 0 806 595 B1**
(45) Veröffentlichungstag und Bekanntmachung des Hinweises auf die Patenterteilung: **13.06.2001**
(21) Anmeldenummer: 97101174.7
(22) Anmeldetag: 24.01.1997
(51) Int. Cl.: F16K 31/06, F02M 25/08

(54) **Elektromagnetisches Schaltventil**
Solenoid valve
Electrovanne

(30) Priorität: 11.05.1996 DE 19619196
(43) Veröffentlichungstag der Anmeldung: 12.11.1997
(73) Patentinhaber: Pierburg Aktiengesellschaft, 41460 Neuss (DE)
(72) Erfinder: Zurke, Janusz, 42277 Wuppertal (DE)

(56) Entgegenhaltungen:
- EP-A- 0 196 273
- DE-A- 2 740 646
- DE-A- 4 430 723

## Beschreibung

Die Erfindung betrifft ein elektromagnetisches Schaltventil, insbesondere für eine Anwendung bei Brennkraftmaschinen, nach dem Oberbegriff des Patentanspruchs 1.

Bei Brennkraftmaschinen werden Schaltventile für diverse Schaltfunktionen eingesetzt, zum Beispiel ist aus der DE-A1 41 40 255 ein Schaltventil bei einer Entlüftungsvorrichtung für einen Brennstofftank einer Brennkraftmaschine bekannt, das eine Belüftungsleitung zur Atmosphäre steuert. Die absperrbare Belüftungsleitung ermöglicht es, gezielt Unter- und Überdrücke in der Anlage einstellen zu können, um dadurch deren Funktionstüchtigkeit zu überprüfen.

Bei diesem Schaltventil ist vorgesehen, daß oberhalb eines vorbestimmten Überdruckes in der Anlage die erzeugte Druckkraft ausreicht, das Absperrventil zu öffnen und somit ohne Schaden eine Druckentlastung zu ermöglichen.

Diese Funktion wird dadurch erreicht, daß der das Ventilschließteil im erregten Zustand in Schließstellung bewegende Magnetkreis nur so stark ausgebildet ist, daß oberhalb eines vorbestimmten Überdruckes die dadurch erzeugte Druckkraft ausreicht, das Ventilschließteil in Öffnungsstellung zu verschieben.

Bei dieser Vorrichtung besteht der Nachteil, daß aufgrund der großen Exemplarstreuungen der Magnetspule und der geringen Druckwirkfläche des Ventilschließteils nicht tolerierbare Druckabweichungen zwischen den einzelnen Anlagen auftreten, die unter Umständen deren Zerstörung bewirken können.

Aus der DE-A1 44 30 723 ist ein gattungsgemäßes Schaltventil bekannt, bei dem in einer Ausführungsform an dem Anschlußstutzen oder Anschlußkanal, an dem der Ventilsitz angeordnet ist, ein Abzweig besteht, in dem ein Saug- oder Druckventil angeordnet ist, das einen Bypasskanal zum Ventilsitz steuert.

Es ist daher Aufgabe der Erfindung, ausgehend von einem gattungsgemäßen Schaltventil dieses so auszubilden, daß eine Anordnung eines Druck- und Saugventils ohne größeren Platzbedarf möglich wird.

Diese Aufgabe ist durch die im Kennzeichen des Patentanspruchs 1 angegebenen Merkmale gelöst worden, wobei vorteilhafte Weiterbildungen in den Unteransprüchen angegeben sind.

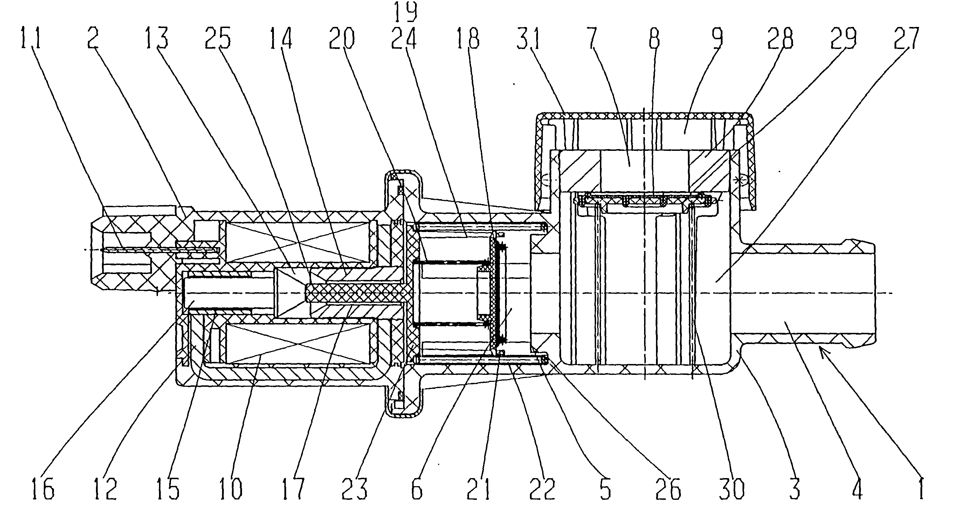

Ein Ausführungsbeispiel der Erfindung ist in der Zeichnung dargestellt und wird nachfolgend beschrieben.

Die Zeichnung zeigt einen Schnitt durch ein erfindungsgemäßes elektrisches Schaltventil 1, das beispielsweise für eine Entlüftungsvorrichtung eines Brennstofftanks einer Brennkraftmaschine verwendet werden kann. Dieses besteht aus einem Spulengehäuse 2 und einem Ventilgehäuse 3, wobei das Ventilgehäuse 3 einen Anschlußstutzen 4 für das zu steuernde Medium aufweist, der über einen Ventilsitz 5 in eine atmosphärisch belüftete Kammer 6 und über einen Bypasskanal 7 mit einem Saugventil 8 in die Atmosphäre 9 führt.

Das Spulengehäuse 2 weist einen Spulenkörper 10 mit Kontaktfahnen 11 sowie einen Ankerjoch 12 auf.
In einer zentralen Bohrung 13 sind ein Ankerkern 14 und ein Lagerabschnitt 15 für einen Magnetanker 16 angeordnet, wobei der Ankerkern 14 eine Durchgangsöffnung 17 aufweist, die in die atmosphärisch belüftete Kammer 6 des Ventilgehäuses 3 führt.

Erfindunsgemäß ist nun vorgesehen, daß der Ventilsitz 5 des Ventilgehäuses 3 mit einer Ventilplatte 18 zusammenwirkt, die in einem Zwischenkorb 19 eingespannt ist und durch eine Feder 20 gegen Axialanschläge 21 des Zwischenkorbs 19 belastet ist, wobei der Zwischenkorb 19 innerhalb der Kammer 6 radial und axial gelagert und unter der Kraft einer Feder 22 gegen einen Magnetanker 16 belastet ist und durch diesen bei Magnetisierung in Richtung des Ventilsitzes 5 verstellt werden kann, so daß die Ventilplatte 18 gegen den Ventilsitz 5 zur Anlage kommt und dabei von den Axialanschlägen 21 des Zwischenkorbes 19 abhebt.

Wie aus der Zeichnung erkennbar ist, ist der Zwischenkorb 19 aus einer runden Grundplatte 23 gebildet, die auf der einen Seite mehrere Rippen 24 aufweist, die die Axialanschläge 21 aufweisen und die die Ventilplatte 18 belastende Feder 20 führen, und auf der anderen Seiten einen Stangenansatz 25 aufweist, der durch die Durchgangsöffnung 17 ragt und unter der Kraft der zwischen einer Wand 26 der Kammer 6 und dem äußeren Rand der Grundplatte 23 eingespannten Feder 22 gegen den Magnetanker 16 belastet ist.

Vorteilhafterweise ist vorgesehen, daß zwischen Anschlußstutzen 4 und Bypasskanal 7 eine Saugventilkammer 27 besteht, die durch eine den Bypasskanal 7 aufweisende Ventilsitzbuchse 28 zur Atmosphäre begrenzt ist, wobei die Ventilsitzbuchse 28 mit einer Ventilplatte 29 des Saugventils 8 zusammenwirkt, die durch eine innerhalb der Ventilkammer 27 angeordnete Feder 30 belastet ist.

Wie aus der Zeichnung erkennbar, ist der Austrittsabschnitt der Ventilsitzbuchse 28 durch einen auf das Ventilgehäuse 3 aufgeschobenen Deckel 31 gegen Verschmutzung geschützt. Dadurch, daß die Ventilplatten 18, 29 und Federn 20 und 30 flächen- und kräftemäßig abgestimmt sind, wird erreicht, daß die Ventilplatten bei einer gleichen, vorbestimmten Druckdifferenz von den Ventilsitzen abheben.

Durch die in platzsparenderweise angeordneten großen Ventilplatten läßt sich diese Druckdifferenz sehr leicht mit geringer Exemplarstreuung einstellen.

## Patentansprüche

1. Elektromagnetisches Schaltventil (1), insbesondere für die Verwendung bei einer Brennkraftmaschine, bestehend aus einem Spulengehäuse (2) und einem Ventilgehäuse (3), wobei das Ventilgehäuse (3) einen Anschlußstutzen (4) für das zu steuernde Medium aufweist, der über einen Ventilsitz (5) in eine atmosphärisch belüftete Kammer (6) und über einen Bypasskanal (7) mit einem Saugventil (8) in die Atmosphäre führt, wobei der Ventilsitz (5) mit einer Ventilplatte (18) zusammenwirkt, die in einem Zwischenkorb (19) eingespannt ist und wobei der Zwischenkorb (19) innerhalb der Kammer (6) radial und axial gelagert ist und unter der Kraft einer Feder (22) gegen einen Magnetanker (16) belastet ist und durch diesen bei Magnetisierung in Richtung des Ventilsitzes (5) verstellt werden kann, so daß die Ventilplatte (18) gegen den Ventilsitz (5) zur Anlage kommt, **dadurch gekennzeichnet,** daß die Ventilplatte (18) durch eine Feder (20) gegen Axialanschläge (21) des Zwischenkorbes (19) belastet ist und daß die Ventilplatte (18) bei der Erregung des Magnetankers (16) von den Axialanschlägen (21) des Zwischenkorbes (19) abhebt.

2. Schaltventil nach Anspruch 1, dadurch gekennzeichnet, daß zwischen Anschlußstutzen (4) und Bypasskanal (7) eine Saugventilkammer (27) besteht, die durch eine den Bypasskanal (7) aufweisende Ventilsitzbuchse (28) zur Atmosphäre begrenzt ist, wobei die Ventilsitzbuchse (28) mit einer Ventilplatte (29) des Saugventils (8) zusammenwirkt, die durch eine innerhalb der Ventilkammer (27) angeordneten Feder (30) belastet ist.

## Claims

1. Electromagnetic control valve (1), in particular for use in an internal combustion engine, comprising a coil housing (2) and a valve housing (3), wherein the valve housing (3) has a connection piece (4) for the medium to be controlled, which connection piece leads via a valve seat (5) into an atmospherically ventilated chamber (6) and via a bypass channel (7) with a suction valve (8) into the atmosphere, wherein the valve seat (5) cooperates with a valve plate (18), which is clamped in an intermediate basket (19), and wherein the intermediate basket (19) is radially and axially supported inside the chamber (6) and is loaded under the action of a spring (22) towards a magnet armature (16) and may be displaced by means of the latter upon magnetization in the direction of the valve seat (5), so that the valve plate (18) comes into contact with the valve seat (5), **characterized in** that the valve plate (18) is loaded by a spring (20) towards axial stops (21) of the intermediate basket (19) and that the valve plate (18) upon excitation of the magnet armature (16) lifts off the axial stops (21) of the intermediate basket (19).

2. Control valve according to claim 1, **characterized in** that between connection piece (4) and bypass channel (7) there is a suction valve chamber (27), which is delimited relative to the atmosphere by a valve seat bush (28) comprising the bypass channel (7), wherein the valve seat bush (28) cooperates with a valve plate (29) of the suction valve (8), which valve plate is loaded by a spring (30) disposed inside the valve chamber (27).

## Revendications

1. Électrovanne de commande (1), en particulier pour utilisation sur un moteur à combustion interne, constituée d'une boîte à bobine (2) et d'une boîte à soupapes (3), la boîte à soupapes (3) présentant une tubulure de raccordement (4) pour le fluide à commander, laquelle mène par un siège de soupape (5) dans une chambre (6) communiquant avec l'atmosphère et, par un conduit de dérivation (7) pourvu d'une soupape d'aspiration (8), dans l'atmosphère, le siège de soupape (5) coopérant avec un plateau de soupape (18) qui est monté dans un panier intermédiaire (19), et le panier intermédiaire (19) étant appuyé radialement et axialement à l'intérieur de la chambre (6) et chargé sous la force d'un ressort (22) contre une armature d'aimant (16) et pouvant, en cas d'aimantation, être déplacé par celle-ci en direction du siège de soupape (5), de sorte que le plateau de soupape (18) vient s'appuyer contre le siège de soupape (5), caractérisée par le fait que le plateau de soupape (18) est chargé par un ressort (20) contre des butées axiales (21) du panier intermédiaire (19), et que lors de l'excitation de l'armature d'aimant (16), le plateau de soupape (18) s'écarte des butées axiales (21) du panier intermédiaire (19).

2. Électrovanne de commande selon la revendication 1, caractérisée par le fait qu'entre la tubulure de raccordement (4) et le conduit de dérivation (7) existe une chambre à soupape d'aspiration (27) qui est limitée vers l'atmosphère par une douille de siège de soupape (28) qui présente le conduit de dérivation (7), la douille de siège de soupape (28) coopérant avec un plateau de soupape (29) de la soupape d'aspiration (8) qui est chargé par un ressort (30) disposé à l'intérieur de la chambre à soupape (27).
